# EUROPÄISCHE PATENTSCHRIFT

(11) **EP 2 203 383 B1**
(45) Veröffentlichungstag und Bekanntmachung des Hinweises auf die Patenterteilung: **20.07.2016**
(21) Anmeldenummer: 08805089.3
(22) Anmeldetag: 06.10.2008
(51) Int. Cl.: C01B 25/37, H01M 4/58

(54) **EISEN(III)ORTHOPHOSPHAT FÜR LI-IONEN-AKKUMULATOREN**
IRON(III) ORTHOPHOSPHATE FOR LI-ION ACCUMULATORS
ORTHOPHOSPHATE FERRIQUE POUR ACCUMULATEURS LI-IONS

(30) Priorität: 16.10.2007 DE 102007049757
(43) Veröffentlichungstag der Anmeldung: 07.07.2010
(73) Patentinhaber: Chemische Fabrik Budenheim KG, 55257 Budenheim (DE)
(72) Erfinder: WISSEMBORSKI, Rüdiger, 55435 Gau-Algesheim (DE); BÜHLER, Gunnar, 56645 Nickenich (DE); MARKMANN, Joachim, 55452 Dorsheim (DE); KÜMMET, David, 55257 Budenheim (DE)
(74) Vertreter: WSL Patentanwälte Partnerschaft mbB
(86) Internationale Anmeldenummer: PCT/EP2008/063348
(87) Internationale Veröffentlichungsnummer: WO 2009/050055

(56) Entgegenhaltungen:
- US-A- 3 070 423
- REALE P. ET AL: "Synthesis and Thermal Behavior of Hydrated Iron(III) Phosphates of Interest as Positive Electrodes in Li Battieries" CHEMISTRY OF MATERIALS, Bd. 15, Nr. 26, 4. Dezember 2003 (2003-12-04), Seiten 5051-5058, XP002523335 in der Anmeldung erwähnt
- CHEMICAL ABSTRACTS, AMERICAN CHEMICAL SOCIETY, US, Bd. 113, Nr. 4, 23. Juli 1990 (1990-07-23), XP000213215 ISSN: 0009-2258 & SU 1 549 916 A1 (BRUSS TI KIROVA [SU]; KAZAKHSK NI PI FOSFORNOJ [SU]) 15. März 1990 (1990-03-15)
- DATABASE CA [Online] CHEMICAL ABSTRACTS SERVICE, COLUMBUS, OHIO, US; ZHENG, JUN-CHAO ET AL: "Effect of pH value on performance of FePO4.cntdot.xH2O and LiFePO4 in synthesis process" XP002523299 gefunden im STN Database accession no. 150:125020 & ZHONGGUO YOUSE JINSHU XUEBAO , 18(5), 867-872 CODEN: ZYJXFK; ISSN: 1004-0609, 2008,
- DATABASE CA [Online] CHEMICAL ABSTRACTS SERVICE, COLUMBUS, OHIO, US; WANG, ZHI-XING ET AL: "Preparation of precursor of LiFePO4 and its performance" XP002523300 gefunden im STN Database accession no. 150:8303 & GONGNENG CAILIAO , 39(4), 614-617 CODEN: GOCAEA; ISSN: 1001-9731, 2008,

## Beschreibung

Die vorliegende Erfindung betrifft ein Eisen(III)orthophosphat, dessen Herstellung sowie dessen Verwendung zur Herstellung von LiFePO₄-Kathodenmaterial für Li-Ionen-Akkumulatoren.

Wiederaufladbare Li-Ionen-Akkumulatoren sind weit verbreitete Energiespeicher, insbesondere im Bereich mobiler Elektronik, da sich der Li-Ionen-Akkumulator durch eine hohe Energiedichte auszeichnet und eine hohe Nennspannung von 3,7 Volt liefern kann, so daß der Li-Ionen-Akkumulator bei vergleichbarer Leistung deutlich kleiner und leichter ist als herkömmliche Akkumulatoren. Als Kathodenmaterialien haben sich Spinelle wie LiCoO₂, LiNiO₂, LiNi₁₋ₓCoₓO₂ und LiMnₙO₄ etabliert. Um die Sicherheit der Li-Ionen-Akkumulatoren zu erhöhen, vor allem in Bezug auf eine thermische Überlastung im Betrieb, wurde LiFePO₄ als Kathodenmaterial entwickelt. Dieses Material zeichnet sich durch eine bessere Leistung, höhere spezifische Kapazität sowie hohe thermische Stabilität im Betrieb aus.

An das Kathodenmaterial eines Akkumulators werden hohe Reinheitsansprüche gestellt, da jede Kontamination, die während des Betriebes (Laden bzw. Entladen) unerwünschte Redox-Reaktionen eingehen kann, die Leistung des Akkumulators nachteilig beeinflußt. Die Art und Konzentration der möglichen Kontaminationen hängt im wesentlichen von der Qualität der zur Herstellung des Kathodenmaterials eingesetzten Rohstoffe ab. Im Herstellungsprozeß des Kathodenmaterials können Maßnahmen zur nachträglichen Reduzierung von Verunreinigungen getroffen werden, was jedoch im allgemeinen mit einer Erhöhung der Herstellungskosten verbunden ist. Es ist daher erstrebenswert, möglichst reine Ausgangsmaterialien bzw. Rohstoffe für die Herstellung des Kathodenmaterials zu verwenden.

Ein Ausgangsmaterial für die Herstellung von LiFePO₄ für Lithium-Ionen-Akkumulatoren ist Eisenorthophosphat, dessen Reinheit und Struktur bzw. Morphologie die Qualität des daraus hergestellten Kathodenmaterials wesentlich beeinflußt.

Bekannte Verfahren zur Herstellung von Eisen(III)orthophosphat verwenden FeSO₄ und FeCl₃ als Ausgangsmaterialien bzw. Rohstoffe, aber auch metallorganische Vorläuferverbindungen, wie FeC₂O₂ (Gmelins Handbuch der anorganischen Chemie, Eisen Teil B, Seiten 773 ff; US-A-3,407,034; C. Delacourt et al., Chem. Mater. 2003, 15, 5051-5058; Zhicong Shi et al., Electrochemical and Solid State Letters 2005, 8, A396-A399). Die Phosphor- bzw. Phosphatkomponente wird bei diesen Ausgangsmaterialien über ein Phosphatsalz bzw. Phosphorsäure eingebracht. In den beschriebenen Verfahren sind immer auch Zusätze von HCl, NaOH, NH₃, NaClO₃ oder Tenside notwendig, um die chemisch-physikalischen Eigenschaften der erhaltenen Produkte zu steuern. Dies hat zur Folge, daß die so hergestellten Materialien stets Verunreinigungen von Anionen, wie Chlorid oder Sulfat, Kationen, wie Natrium oder Ammonium, oder organische Komponenten enthalten. Großtechnisch lassen sich diese Verunreinigungen, wenn überhaupt, nur durch höchst aufwendige und kostenintensive Reinigungsverfahren entfernen.

Weitere kationische Kontaminationen, wie z. B. Übergangsmetalle, die ursprünglich in den eingesetzten Rohstoffen wie FeSO₄ oder FeCl₃ enthalten waren, können im allgemeinen nicht auf einfache Weise abgetrennt oder ausgewaschen werden, da auch sie in der Regel schwer lösliche Phosphatsalze bilden und gemeinsam mit dem gewünschten Eisenphosphat kristallisieren.

Die WO 02/30815 beschreibt ein Verfahren zur Herstellung von LiFePO₄ aus Eisenphosphat und Lithium, wobei zur Herstellung des Eisenphosphats ein Eisenoxid in 85%iger Phosphorsäure unter Erwärmen aufgelöst wird. Anschließend wird die Lösung solange verdünnt, bis die Löslichkeitsgrenze von FePO₄ erreicht ist und das Material kristallisiert. Durch fraktioniertes Verdünnen sollen hierbei unerwünschte Metallphosphate abgetrennt werden, die ein kleineres Löslichkeitsprodukt besitzen als FePO₄. Dieses Verfahren hat den Nachteil, daß es einen sehr hohen Energieeinsatz erfordert und viel Wasser benötigt wird, um das Produkt auszufällen. Bei diesem Verfahren bildet sich ein löslicher Komplex des Eisens, der über Wochen stabil ist und nur langsam kristallisiert. Dies reduziert die wirtschaftliche Ausbeute des Produkts erheblich. Durch Sieden der Lösung über mehrere Tage kann die Ausbeute gesteigert werden, was allerdings einen sehr hohen Energieaufwand erfordert. Zudem fällt bei dem Verfahren eine große Menge an verdünnter Phosphorsäure an, die nur nach Aufkonzentrierung wieder in den Prozeß eingesetzt werden kann. Das Verfahren ist daher sowohl aus ökonomischen als auch ökologischen Gesichtspunkten nicht interessant.

Die Verfahren nach dem Stand der Technik zur Herstellung von Eisenphosphaten haben weitere Nachteile, wenn das erhaltene Eisenphosphatprodukt zur Herstellung von LiFePO₄ für Li-Ionen-Akkumulatoren verwendet werden soll. Wichtige Gesichtspunkte für die Eignung des Materials sind die Morphologie und die Korngrößenverteilung der Eisenphosphate. Durch die Verfahren der Fällung von Eisenphosphat nach dem Stand der Technik werden in der Regel sphärische Kristalle unterschiedlicher Größe erhalten. Diese haben allerdings eine geringe Oberfläche im Vergleich zu anderen Kristallmorphologien. Für die Anwendung als Kathodenmaterial in Li-lonen-Akkumulatoren ist ein Eisenphosphat mit einer großen Kristalloberfläche vorteilhaft, um eine Penetration der Lithiumionen in großer Anzahl und mit hoher Geschwindigkeit zu gewährleisten. Darüber hinaus ist es vorteilhaft, Kristalle von geringer Größe zu erhalten, um die Diffusionsstrecken und -zeiten der Lithiumionen zu verringern. Des weiteren ist eine hohe Schüttdichte und Verdichtbarkeit des Materials erwünscht, um in dem hergestellten Kathodenmaterial eine hohe Energiespeicherdichte zu realisieren.

Die Aufgabe der vorliegenden Erfindung bestand daher darin, ein Eisenphosphat und ein Verfahren zu dessen Herstellung bereitzustellen, bei dem die bekannten Nachteile aus dem Stand der Technik überwunden werden und das die zuvor beschriebenen gewünschten Eigenschaften besitzt.

Die Aufgabe der vorliegenden Erfindung wird gelöst durch ein Verfahren, bei dem man Eisen(II)-, Eisen(III)- oder gemischte Eisen(II,III)-Verbindungen, ausgewählt unter Hydroxiden, Oxiden, Oxidhydroxiden, Oxidhydraten, Carbonaten und Hydroxidcarbonaten, mit Phosphorsäure mit einer Konzentration im Bereich von 5% bis 50% bei einer Temperatur im Bereich von 50° bis 180°C und für einen Zeitraum von0,5 min bis 120 min umsetzt, nach der Umsetzung gegebenenfalls vorhandenes Eisen(II) durch Zugabe eines Oxidationsmittels in Eisen (III) überführt und festes Eisen(III)orthophosphat aus dem Reaktionsgemisch abtrennt.

Es wird eine wäßrige Phosphorsäurelösung möglichst hoher Reinheit eingesetzt, um den Eintrag von Verunreinigungen gering zu halten.

Das erfindungsgemäße Eisen(III)orthophosphat liegt in der Form plättchenförmiger Kristalle vor. Diese Kristalle haben eine Dicke von < 300 nm, bevorzugt < 200 nm, besonders bevorzugt < 100 nm. Die Abmessungen der plättchenförmigen Kristalle in den zwei zur Dicke senkrechten Dimensionen liegen im Sub-Mikrometerbereich, bevorzugt im Bereich von 200 bis 1000 nm, besonders bevorzugt 300 bis 900 nm, ganz besonders bevorzugt 400 bis 800 nm.

Bei dem erfindungsgemäßen Verfahren können die eingesetzten Eisenverbindungen als pulverförmige Rohstoffe direkt mit der Phosphorsäure gemischt und umgesetzt werden. Alternativ können die Eisenverbindungen auch zunächst über eine vorausgehende Fällung frisch erzeugt und im Anschluß als Filterkuchen weiterverarbeitet, d. h. mit der Phosphorsäure vermischt werden.

Je nach Feuchtigkeitsgehalt und Art des Rohstoffes können hier Phosphorsäuren mit verschiedenen Konzentrationen eingesetzt werden. Erfindungsgemäß wird eine Phosphorsäure mit einer Konzentration im Bereich von 5% bis 50% eingesetzt. Niedrigere Konzentrationen liefern nicht die gewünschten Umsetzungsgeschwindigkeiten der Eisenverbindungen zu Eisenorthophosphat. Bei zu hoher Phosphorsäurekonzentration bleibt das gewünschte Eisenorthophosphat in Lösung und kristallisiert nicht in annehmbarer Zeit, Menge und/oder Morphologie aus.

In einer bevorzugten Ausführungsform der Erfindung wird die Umsetzung der Eisenverbindung mit Phosphorsäure mit einer Phosphorsäurekonzentration im Bereich von etwa 8% bis etwa 23% durchgeführt. Dies entspricht bei einer reinen Phosphorsäure einer Dichte im Bereich von 1,042 g/l bis 1,133 g/l.

Durch das Mischen des Eisenrohstoffs mit der Phosphorsäure entsteht zunächst eine durch den Feststoffanteil des Rohstoffs gefärbte bzw. getrübte Aufschlämmung. In einer Ausführungsform der Erfindung wird die Aufschlämmung dann auf eine erhöhte Umsetzungstemperatur erwärmt. Die Umsetzung der Eisenverbindungen mit Phosphorsäure wird bei einer Temperatur im Bereich von 50 bis 180°C, vorzugsweise im Bereich von 60°C bis 150°C, besonders bevorzugt im Bereich von 70°C bis 120°C durchgeführt.

Die Umsetzung der Eisenverbindungen mit Phosphorsäure erfolgt innerhalb einen Zeitraum von 0,5 min bis 120 min, vorzugsweise von 1 min bis 60 min, besonders bevorzugt von 2 min bis 30 min.

Das Ende der Reaktion kann an einem auftretenden Farbumschlag hin zu einer blaßgelben bis rosa Farbe festgestellt werden.

In einer Ausführungsform der Erfindung wird die Umsetzung der Eisenverbindung mit Phosphorsäure unter intensivem Durchmischen des Reaktionsansatzes, vorzugsweise unter Rühren durchgeführt. Hierfür können alle auf dem Gebiet bekannten Mischer und Rührer, die für einen solchen Verwendungszweck geeignet sind, eingesetzt werden. Es können auch mit Vorteil Leitstrahlmischer, Homogenisatoren, Flußreaktionszellen etc. zur Durchmischung und/oder Bewegung des Reaktionsansatzes verwendet werden.

Das erfindungsgemäße Eisen(III)orthophoshat wird hergestellt, indem man Eisen(II)-, Eisen(III)-oder gemischte Eisen(II,III)-Verbindungen als Ausgangsmaterialien einsetzt. Je nachdem welche dieser Verbindungen in welcher Menge eingesetzt wurden, enthält das Reaktionsgemisch nach der Umsetzung mit der Phosphorsäure mehr oder weniger Eisen(II). Dieses wird erfindungsgemäß durch Zugabe eines Oxidationsmittels in Eisen(III) überführt. Die Oxidation von Eisen(II) nach Eisen(III) kann mit jedem geeigneten Oxidationsmittel durchgeführt werden. In einer Ausführungsform der Erfindung wird die Oxidation von gegebenenfalls vorhandenem Eisen(II) durch Zugabe von Wasserstoffperoxid (H₂O₂) durchgeführt. In einer alternativen Ausführungsform der Erfindung wird die Oxidation durch Zuführung von Luft oder Sauerstoff in im wesentlichen reiner Form durchgeführt. In einer weiteren alternativen Ausführungsform der Erfindung wird die Oxidation durch Zuführung von Ozon durchgeführt. Die Oxidation durch Zugabe eines geeigneten Oxidationsmittels wird vorzugsweise unmittelbar nach Beendigung der Umsetzung der Eisenverbindungen mit Phosphorsäure durchgeführt. Bei der Oxidationsreaktion kann die Temperatur des Reaktionsgemisches bei der zuvor für die Umsetzung der Eisenverbindungen mit Phosphorsäure eingestellten Temperatur oder in deren Nähe gehalten werden. Alternativ kann die Oxidationsreaktion nach dem Abkühlen des Reaktionsgemischs auf Raumtemperatur oder darunter durchgeführt werden. Allerdings läuft die Oxidationsreaktion bei erhöhter Temperatur in der Regel leichter und schneller ab, weshalb die Durchführung der Oxidationsreaktion bei erhöhter Temperatur bevorzugt ist.

Die Oxidationsreaktion wird durchgeführt, bis in dem Reaktionsgemisch kein bzw. im wesentlichen kein Eisen(II) mehr nachweisbar ist. Anschließend wird das Eisen(III)orthophosphat von dem Reaktionsgemisch abgetrennt. In einer Ausführungsform der Erfindung wird das Eisen(III)orthophosphat durch Filtration aus dem Reaktionsgemisch abgetrennt. Bei alternativen Ausführungsformen der Erfindung erfolgt die Abtrennung des Eisen(III)orthophosphats aus dem Reaktionsgemisch durch Sedimentation, Zentrifugieren oder Kombinationen der vorgenannten Trennverfahren. Zweckmäßigerweise wird das aus dem Reaktionsgemisch abgetrennte Eisen(III)orthophosphat anschließend bei erhöhter Temperatur und/oder unter vermindertem Druck getrocknet. Alternativ kann das Eisen(III)orthophosphat nach der Abtrennung auch vorteilhaft in feuchter Form weiterverarbeitet werden.

Das Verfahren zur Herstellung des erfindungsgemäßen Eisen(III)orthophosphats hat gegenüber anderen bekannten Verfahren zur Herstellung von Eisen(III)phosphaten einige ökologische und ökonomische Vorteile. Die nach der Abtrennung von Eisen(III)orthophosphat zurückbleibende Mutterlauge enthält im wesentlichen keine verunreinigenden Umsetzungsprodukte, wie beispielsweise Sulfate oder Chloride, die bei den bekannten Verfahren nach dem Stand der Technik zurückbleiben, bei denen Eisensulfat oder Eisenchlorid als Ausgangsmaterial eingesetzt werden. Mutterlauge aus dem Verfahren gemäß der vorliegenden Erfindung kann daher durch Zugabe konzentrierter Phosphorsäure wieder auf die gewünschte Konzentration eingestellt werden und ist somit vollständig in den Prozeß rückführbar. Dies spart Kosten und vermeidet unerwünschte Abfälle.

Das erfindungsgemäße Eisen(III)orthophosphat unterscheidet sich auch strukturell und hinsichtlich seiner Zusammensetzung bzw. Verunreinigungen von Eisen(III)orthophosphat, das nach bekannten Verfahren aus dem Stand der Technik hergestellt wurde. Dazu tragen unter anderem auch die als Ausgangsmaterialien eingesetzten Eisen(II)-, Eisen(III)- und gemischten Eisen(II,III)-Verbindungen bei, die unter Hydroxiden, Oxiden, Oxidhydroxiden, Oxidhydraten, Carbonaten und Hydroxidcarbonaten ausgewählt sind. Im Gegensatz zur vorliegenden Erfindung setzen bekannte Verfahren zur Herstellung von Eisen(III)orthophosphat nach dem Stand der Technik unter anderem Eisensulfat oder sulfathaltige Rohstoffe ein und steuern den Verlauf des pH-Wertes der Reaktion mit Natronlauge. Die erhaltenen Eisenphosphate enthalten daher hohe Rückstände an Sulfat und Natrium, welche wiederum nachteilig die Leistung von LiFePO₄-Kathodenmaterialien für Li-Ionen-Akkumulatoren, die aus den Eisenphosphaten hergestellt werden, beeinflussen.

In einer Ausführungsform der vorliegenden Erfindung weist das Eisen(III)orthophosphat daher einen Schwefelgehalt < 300 ppm auf. In einer weiteren Ausführungsform der vorliegenden Erfindung weist das Eisen(III)orthophosphat oder einen Nitratgehalt < 100 ppm auf. Ein zu hoher Gehalt an Schwefel, meist als Sulfat vorliegend, und ein zu hoher Gehalt an Nitrat beeinträchtigen die Qualität eines aus dem Eisen(III)orthophosphat hergestellten LiFePO₄-Kathodenmaterials für Li-Ionen-Akkumulatoren, da diese Anionen unerwünschte Redox-Reaktionen eingehen. In einer weiteren Ausführungsform der Erfindung weist das Eisen(III)orthophosphat einen Gehalt an Natrium und Kalium von jeweils < 300 ppm auf. Natrium- und Kaliumkationen beeinträchtigen ebenfalls die Qualität eines aus dem Eisen(III)orthophosphat hergestellten LiFePO₄-Kathodenmaterials, da sie Lithiumplätze besetzen können.

Die Eigenschaften des erfindungsgemäßen Produkts, nämlich des erfindungsgemäßen Eisen(III)orthophosphats, werden somit durch sein Herstellungsverfahren und die zu seiner Herstellung verwendeten Ausgangsmaterialien wesentlich beeinflußt und unterscheiden sich von Eisen(III)orthophosphat nach dem Stand der Technik.

Eisen(III)orthophosphate, die nach allgemein bekannten Verfahren aus Eisensulfat oder Eisenchlorid hergestellt werden, weisen zudem auch Unterschiede in der Kristallstruktur auf. Röntgenstrukturuntersuchungen haben gezeigt, daß nach dem Stand der Technik aus Eisensulfat oder Eisenchlorid hergestellte Eisen(III)orthophosphate überwiegend in der Metastrengit I-Struktur mit geringen Anteilen an Strengit und Metastrengit II (Phosphosiderit) vorliegen. Demgegenüber wurde bei Röntgenstrukturuntersuchungen an erfindungsgemäß hergestellten Eisen(III)orthophosphaten festgestellt, daß diese überwiegend in der Metastrengit II-Struktur (Phosphosiderit) mit sehr geringen oder nicht nachweisbaren Anteilen an Strengit und Metastrengit vorliegen, wobei > 80 Gew.-%, vorzugsweise > 90 Gew.-%, besonders bevorzugt > 95 Gew.-% des Eisen(III)orthophosphats in der Metastrengit II- (Phosphosiderit) Kristallstruktur vorliegen.

Das Vorkommen der drei zuvor beschriebenen allotropen Formen von Eisen(III)orthophosphat (Metastrengit I, Metastrengit II und Strengit) ist in der Literatur ebenso beschrieben, wie die Schwierigkeit, ein phasenreines System herzustellen (C. Delacourt et al., Chem. Mater. 2003, 15, 5051-5058). Entgegen den in der Literatur geäußerten Vorbehalten haben die Erfinder nun herausgefunden, daß sich mit dem hierein beschriebenen Verfahren das Eisen(III)phosphat in der Metastrengit II-Struktur auch in einem allein durch die Phosphorsäure bestimmten pH-Wert-Bereich in bemerkenswert reiner Form darstellen läßt.

Das erfindungsgemäße Eisen(III)orthophosphat weist eine plättchenförmige Morphologie mit Metastrengit II-Struktur auf. Diese Struktur erlaubt eine gegenüber sphärischen Partikeln erheblich dichtere Packung der Kristallite und Teilchen bei geringerem Ausschlußvolumen. Mit dem erfindungsgemäßen Eisen(III)orthophosphat sind daher hohe Schüttdichten realisierbar, was für den Einsatz in LiFePO₄-Kathodenmaterialien besonders vorteilhaft ist. Eine geringe Dicke der Kristallplättchen gewährleistet beispielsweise eine hohe Reaktionsgeschwindigkeit bei der Herstellung von LiFePO₄ sowie eine höhere Leistung des fertigen Kathodenmaterials, da die Diffusionsstrecken und Diffusionszeiten der Li-Ionen gegenüber herkömmlichem Material deutlich reduziert werden können.

Das erfindungsgemäße Eisen(III)orthophosphat besitzt daher zumindest in einer Dimension eine mittlere Primärteilchengröße < 1µm, vorzugsweise < 500 nm, besonders bevorzugt < 100 nm. Des weiteren weist das erfindungsgemäße Eisen(III)ortho-phosphat in einer bevorzugten Ausführungsform eine Schüttdichte > 600 g/l, vorzugsweise > 800 g/l, besonders bevorzugt > 1000 g/l auf.

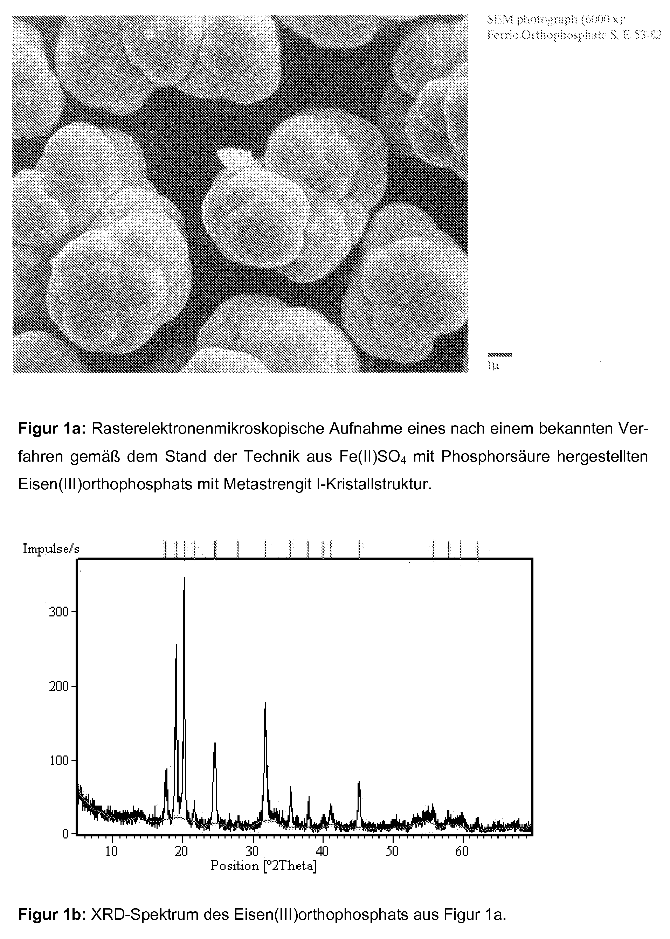

Das erfindungsgemäße Eisen(III)orthophosphat zeigt somit eine sehr feine Primärpartikelgröße und dennoch gleichzeitig eine sehr hohe Schüttdichte. Im Vergleich zum Stand der Technik war dies überraschend. Eisen(III)orthophosphate, die nach allgemein bekannten Verfahren aus Eisensulfat oder Eisenchlorid hergestellt werden, weisen üblicherweise eine Primärpartikelgröße von > 1 µm auf, wodurch sich auch hohe Schüttdichten von > 1000 g/l realisieren lassen. Stellt man nach diesen bekannten Verfahren aus Eisensulfat oder Eisenchlorid entsprechende Eisen(III)orthophosphate mit geringeren Primärteilchengrößen im Sub-Mikrometerbereich her, so lassen sich nur geringe Schüttdichten bis 400 g/l erreichen. Die Gründe hierfür liegen vermutlich in der durch die Kristallstruktur beeinflußten Partikelmorphologie und der Teilchengrößenverteilung. Die Morphologie von Eisen(III)phosphaten, die nach allgemein bekannten Verfahren aus Eisensulfat oder Eisenchlorid hergestellt werden, besteht überwiegend aus sphärischen Partikeln, wohingegen das erfindungsgemäße Eisen(III)orthophosphat die zuvor bereits beschriebene Morphologie mit einem hohen Anteil an eckigen, plättchenförmigen Kristallen besitzt (s. Figuren 1 a und 2a).

Die vorliegende Erfindung umfaßt das Produkt Eisen(III)orthophosphat als solches, wie es hierin und in den anhängenden Patentansprüchen beschrieben ist, sowie auch das hierin beschriebene Verfahren zu dessen Herstellung, dessen Verwendung zur Herstellung von LiFePO₄-Kathodenmaterial für Li-Ionen-Akkumulatoren. Des weiteren umfaßt die vorliegende Erfindung LiFePO₄-Kathodenmaterial für Li-Ionen-Akkumulatoren, hergestellt unter Verwendung von Eisen(III)orthophosphat, wie es hierin beschrieben und beansprucht ist, sowie Li-Ionen-Akkumulatoren, die ein LiFePO₄-Kathodenmaterial der vorgenannten Art umfassen.

Weitere Vorteile, Merkmale und Ausführungsformen der vorliegenden Erfindung ergeben sich aus den nachfolgenden Beispielen, welche die vorliegende Erfindung erläutern, diese jedoch nicht beschränken sollen.

### Beispiel 1

2,4 l Phosphorsäurelösung mit einer Dichte von 1,121 g/l wurden auf 92°C erhitzt und anschließend mit 130 g Fe₃O₄ (Firma FarbuHuzhou Huaman Chem. Ind. Co. Ltd.) versetzt. Das Reaktionsgemisch wurde gerührt, und nach 11 min erfolgte ein Farbumschlag nach grau, was als Anzeichen für das Ende der Reaktion angesehen wurde. Bei der zuvor eingestellten Temperatur wurden dann 35 ml 35%iges H₂O₂ innerhalb von 6 min zugetropft, um in dem Reaktionsgemisch vorhandenes Eisen(II) zu Eisen(III) zu oxidieren. Der Gehalt an Eisen(II) in der Reaktionsmischung wurde mit entsprechenden Teststäbchen der Firma Merck kontrolliert. Sobald kein Eisen(II) mehr nachweisbar war, wurde der rosa-grau verfärbte Ansatz für weitere 15 min gerührt. Die Farbe änderte sich nach rosa. Das Produkt wurde abfiltriert und bei 150°C unter Atmosphärendruck getrocknet.

| | |
|---|---|
| Feuchte Ausbeute: | 370 g |
| Trockene Ausbeute: | 305 g |
| Ausbeute in %: | 96,7 |
| Schüttdichte: | 920 g/l |

### Beispiel 2

1 l Phosphorsäurelösung mit einer Dichte von 1,133 g/l wurde auf 95°C erhitzt und anschließend mit 92 g frisch gefälltem Eisenhydroxid (Feststoffgehalt ca. 63%) versetzt. Nach 5 min erfolgte ein Farbumschlag nach grau. Bei der zuvor eingestellten Temperatur wurden innerhalb von 4 min 22 ml 35%iges H₂O₂ zugetropft. Das Reaktionsgemisch wurde anschließend noch für 19 min bei 100°C gehalten, bis die Farbe nach rosa umschlug. Das Produkt wurde abfiltriert und bei 150°C bei Umgebungsdruck getrocknet.

| | |
|---|---|
| Feuchte Ausbeute: | 214 g |
| Trockene Ausbeute: | 124 g |
| Ausbeute in %: | ca. 93 |
| Schüttdichte: | 890 g/l |

### Beispiel 3:

2,7 l Phosphorsäurelösung mit einer Dichte von 1,09 g/l wurden auf 90°C erhitzt und anschließend mit 200 g eines Filterkuchens von frisch gefälltem Eisenhydroxidcarbonat (Feststoffgehalt ca. 48%) versetzt. Währen der portionsweise erfolgten Zugabe stieg die Temperatur auf 96°C an. Nach 5 min erfolgte ein Farbumschlag nach rot-grau. Danach wurden innerhalb von 4 min 20 g 35%iges H₂O₂ zugegeben. Der Gehalt an Eisen(II) wurde wieder mit entsprechenden Teststäbchen der Firma Merck überprüft. Anschließend wurde der Ansatz für weitere 15 min gerührt, filtriert und bei 150°C unter Umgebungsatmosphäre getrocknet.

| | |
|---|---|
| Feuchte Ausbeute: | 193 g |
| Trockene Ausbeute: | 128 g |
| Ausbeute in %: | ca. 96 |
| Schüttdichte: | 810 g/l |

### Figurenbeschreibung

Figur 1 a zeigt eine rasterelektronenmikroskopische Aufnahme eines nach einem bekannten Verfahren gemäß dem Stand der Technik aus Fe(II)SO₄ mit Phosphorsäure hergestellten Eisen(III)orthophosphats mit Metastrengit I-Kristallstruktur.
Figur 1 b zeigt ein XRD-Spektrum des Eisen(III)orthophosphats aus Figur 1 a.

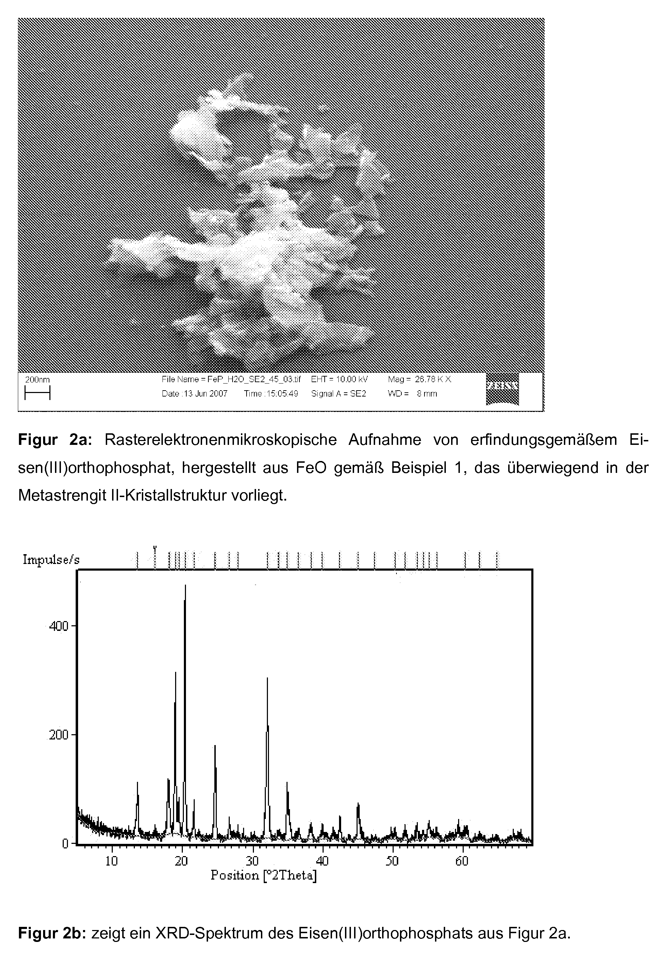

Figur 2a zeigt eine rasterelektronenmikroskopische Aufnahme von erfindungsgemäßem Eisen(III)orthophosphat, hergestellt aus FeO gemäß Beispiel 1, das überwiegend in der Metastrengit II-Kristallstruktur vorliegt.
Figur 2b zeigt ein XRD-Spektrum des Eisen(III)orthophosphats aus Figur 2a.

## Patentansprüche

1. Eisen(III)orthophosphat der allgemeinen Formel FePO₄ x nH₂O (n ≤ 2,5), wobei das Eisen(III)orthophosphat in der Form plättchenförmiger Kristalle mit einer Dicke < 300 nm vorliegt und zumindest in einer Dimension eine mittlere Primärteilchengröße < 1µm besitzt und wobei > 80 Gew.-% des Eisen(III)orthophosphats in der Metastrengit II- (Phosphosiderit-) Kristallstruktur vorliegen, hergestellt durch ein Verfahren, bei dem man
Eisen(II)-, Eisen(III)- oder gemischte Eisen(II,III)-Verbindungen, ausgewählt unter Hydroxiden, Oxiden, Oxidhydroxiden, Oxidhydraten, Carbonaten und Hydroxidcarbonaten, mit Phosphorsäure mit einer Konzentration im Bereich von 5% bis 50% bei einer Temperatur im Bereich von 50°C bis 180°C und für einen Zeitraum von 0,5 min bis 120 min umsetzt,
nach der Umsetzung gegebenenfalls vorhandenes Eisen(II) durch Zugabe eines Oxidationsmittels in Eisen (III) überführt und
festes Eisen(III)orthophosphat aus dem Reaktionsgemisch abtrennt.

2. Eisen(III)orthophosphat nach Anspruch 1 , **dadurch gekennzeichnet, dass** die Umsetzung der Eisenverbindungen mit Phosphorsäure bei einer Temperatur im Bereich von 60°C bis 150°C, besonders bevorzugt im Bereich von 70°C bis 120°C durchgeführt wird.

3. Eisen(III)orthophosphat nach einem der vorangegangenen Ansprüche, **dadurch gekennzeichnet, dass** die Umsetzung der Eisenverbindungen mit Phosphorsäure unter intensivem Durchmischen durchgeführt wird.

4. Eisen(III)orthophosphat nach einem der vorangegangenen Ansprüche, **dadurch gekennzeichnet, dass** die Umsetzung der Eisenverbindungen mit Phosphorsäure für einen Zeitraum von 1 min bis 60 min, besonders bevorzugt von 2 min bis 30 min durchgeführt wird.

5. Eisen(III)orthophosphat nach einem der vorangegangenen Ansprüche, **dadurch gekennzeichnet, dass** die Umsetzung der Eisenverbindungen mit Phosphorsäure mit einer Konzentration im Bereich von 8% bis 23% durchgeführt wird.

6. Eisen(III)orthophosphat nach einem der vorangegangenen Ansprüche, **dadurch gekennzeichnet, dass** die Oxidation von gegebenenfalls vorhandenem Eisen(II) durch Zugabe von Wasserstoffperoxid (H₂O₂) oder durch Zuführung von Luft, reinem Sauerstoff oder Ozon durchgeführt wird.

7. Eisen(III)orthophosphat nach einem der vorangegangenen Ansprüche, **dadurch gekennzeichnet, dass** das Eisen(III)orthophosphat nach der Abtrennung aus dem Reaktionsgemisch bei erhöhter Temperatur und/oder unter vermindertem Druck getrocknet wird.

8. Eisen(III)orthophosphat nach einem der vorangegangenen Ansprüche, **dadurch gekennzeichnet, dass** > 90 Gew.-%, besonders bevorzugt > 95 Gew.-% des Eisen(III)orthophosphats in der Metastrengit II- (Phosphosiderit-) Kristallstruktur vorliegen.

9. Eisen(III)orthophosphat nach einem der vorangegangenen Ansprüche, **dadurch gekennzeichnet, dass** es zumindest in einer Dimension eine mittlere Primärteilchengröße < 500nm, besonders bevorzugt < 100nm besitzt.

10. Eisen(III)orthophosphat nach einem der vorangegangenen Ansprüche, **dadurch gekennzeichnet, dass** es eine Schüttdichte > 600 g/l, vorzugsweise > 800 g/l, besonders bevorzugt > 1000 g/l aufweist.

11. Eisen(III)orthophosphat nach einem der vorangegangenen Ansprüche, **dadurch gekennzeichnet, dass** es einen Gehalt an Natrium und Kalium von jeweils < 300 ppm und/oder einen Schwefelgehalt < 300 ppm und/oder einen Nitratgehalt < 100 ppm aufweist.

12. Verwendung von Eisen(III)orthophosphat nach einem der vorangegangenen Ansprüche zur Herstellung von LiFePO₄-Kathodenmaterial für Li-Ionen-Akkumulatoren.

13. LiFePO₄-Kathodenmaterial für Li-Ionen-Akkumulatoren, hergestellt unter Verwendung von Eisen(III)orthophosphat nach einem der vorangegangenen Ansprüche.

14. Verfahren zur Herstellung von Eisen(III)orthophosphat der allgemeinen Formel FePO₄ x nH₂O (n ≤ 2,5), bei dem man
Eisen(II)-, Eisen(III)- oder gemischte Eisen(II,III)-Verbindungen, ausgewählt unter Hydroxiden, Oxiden, Oxidhydroxiden, Oxidhydraten, Carbonaten und Hydroxidcarbonaten, mit Phosphorsäure mit einer Konzentration im Bereich von 5% bis 50% bei einer Temperatur im Bereich von 50°C bis 180°C und für einen Zeitraum von 0,5 min bis 120 min umsetzt,
nach der Umsetzung gegebenenfalls vorhandenes Eisen(II) durch Zugabe eines Oxidationsmittels in Eisen (III) überführt und
festes Eisen(III)orthophosphat aus dem Reaktionsgemisch abtrennt..

15. Li-Ionen-Akkumulator, umfassend ein LiFePO₄-Kathodenmaterial nach Anspruch 13.

## Claims

1. Iron(III) orthophosphate of the general formula FePO₄ x nH₂O (n ≤ 2.5), wherein the iron(III) orthophosphate is present in the form of platelet-shaped crystals having a thickness of <300 nm and at least in one dimension has an average primary particle size < 1 µm and wherein > 80 wt. % of the iron(III) orthophosphate is present in the metastrengite II (phosphosiderite) crystal structure, produced by a process wherein iron(II), iron(III) or mixed iron(II, III) compounds selected from hydroxides, oxides, oxidehydroxides, oxide hydrates, carbonates and hydroxidecarbonates, are reacted with phosphoric acid having a concentration in the range of 5% to 50% at a temperature within the range of 50°C to 180°C and for a period of from 0.5 to 120 mins,
any iron(II) present after the reaction is converted into iron(III) by addition of an oxidant, and
solid iron(III) orthophosphate is separated off from the reaction mixture.

2. Iron(III) orthophosphate according to Claim 1, **characterised in that** the reaction of the iron compounds with phosphoric acid is carried out at a temperature within the range of 60°C to 150°C, particularly preferably within the range of 70°C to 120°C.

3. Iron(III) orthophosphate according to one of the preceding claims, **characterised in that** the reaction of the iron compounds with phosphoric acid is carried out with vigorous mixing.

4. Iron(III) orthophosphate according to one of the preceding claims, **characterised in that** the reaction of the iron compounds with phosphoric acid is carried out for a period of from 1 min to 60 mins, particularly preferably from 2 mins to 30 mins.

5. Iron(III) orthophosphate according to one of the preceding claims, **characterised in that** the reaction of the iron compounds with phosphoric acid is carried out with a concentration within the range of 8% to 23%.

6. Iron(III) orthophosphate according to one of the preceding claims, **characterised in that** the oxidation of any iron(II) which is present is carried out by the addition of hydrogen peroxide (H₂O₂) or by the supply of air, pure oxygen or ozone.

7. Iron(III) orthophosphate according to one of the preceding claims, **characterised in that** following separation from the reaction mixture the iron(III) orthophosphate is dried at increased temperature and/or at reduced pressure.

8. Iron(III) orthophosphate according to one of the preceding claims, **characterised in that** > 90 wt. %, particularly preferably > 95 wt. % of the iron(III) orthophosphate is present in the metastrengite II (phosphosiderite) crystal structure.

9. Iron(III) orthophosphate according to one of the preceding claims, **characterised in that** at least in one dimension it has an average primary particle size of < 500nm, particularly preferably of < 100nm.

10. Iron(III) orthophosphate according to one of the preceding claims, **characterised in that** it has a bulk density > 600 g/l, preferably > 800 g/l, particularly preferably > 1000 g/l.

11. Iron(III) orthophosphate according to one of the preceding claims, **characterised in that** it has a sodium content and a potassium content of < 300 ppm each and/or a sulphur content of < 300 ppm and/or a nitrate content of < 100 ppm.

12. Use of iron(III) orthophosphate according to one of the preceding claims for the production of LiFePO₄ cathode material for Li ion accumulators.

13. LiFePO₄ cathode material for Li-ion-accumulators, produced by using iron(III) orthophosphate according to one of the preceding claims.

14. A process for the production of iron(III) orthophosphate of the general formula FePO₄ x nH₂O (n ≤ 2.5), wherein
iron(II), iron(III) or mixed iron(II, III) compounds selected from hydroxides, oxides, oxidehydroxides, oxide hydrates, carbonates and hydroxidecarbonates, are reacted with phosphoric acid having a concentration in the range of 5% to 50% at a temperature within the range of 50°C to 180°C and for a period of from 0.5 to 120 mins,
any iron(II) present after the reaction is converted into iron(III) by addition of an oxidant, and
solid iron(III) orthophosphate is separated off from the reaction mixture.

15. Li-ion accumulator comprising a LiFePO₄ cathode material according to Claim 13.

## Revendications

1. Orthophosphate de fer(III) de formule générale FePO₄ x nH₂O (n ≤ 2,5), l'orthophosphate de fer(III) se présentant sous forme de cristaux lamellaires ayant une épaisseur < 300 nm, et possédant, au moins dans une dimension, une granulométrie primaire moyenne < 1 µm, et > 80 % en poids de l'orthophosphate de fer(III) se présentant avec la structure cristalline de la métastrengite II (phosphosidérite), préparé par un procédé dans lequel on fait réagir à une température comprise dans la plage de 50°C à 180°C et pendant une durée de 0,5 min à 120 min des composés de fer (II), de fer (III) ou des composés mixtes de fer(II, III), choisis parmi les hydroxydes, les oxydes, les oxyhydroxydes, les oxydes hydratés, les carbonates et les hydroxycarbonates, avec de l'acide phosphorique à une concentration comprise dans la plage de 5 % à 50 % ; par addition d'un oxydant, on convertit en fer (III) le fer (II) éventuellement présent après la réaction ; et on sépare du mélange réactionnel l'orthophosphate de fer(III) solide.

2. Orthophosphate de fer(III) selon la revendication 1, **caractérisé en ce que** la réaction des composés du fer avec l'acide phosphorique est mise en oeuvre à une température comprise dans la plage de 60°C à 150°C, d'une manière particulièrement préférée dans la plage de 70°C à 120°C.

3. Orthophosphate de fer(III) selon l'une des revendications précédentes, **caractérisé en ce que** la réaction des composés du fer avec l'acide phosphorique est mise en oeuvre en présence d'un mélange intime à grande vitesse.

4. Orthophosphate de fer(III) selon l'une des revendications précédentes, **caractérisé en ce que** la réaction des composés du fer avec l'acide phosphorique est mise en oeuvre pendant une durée de 1 min à 60 min, d'une manière particulièrement préférée de 2 min à 30 min.

5. Orthophosphate de fer(III) selon l'une des revendications précédentes, **caractérisé en ce que** la réaction des composés du fer avec l'acide phosphorique est mise en oeuvre avec une concentration comprise dans la plage de 8 % à 23 %.

6. Orthophosphate de fer(III) selon l'une des revendications précédentes, **caractérisé en ce que** l'oxydation du fer(II) éventuellement présent est mise en oeuvre par addition de peroxyde d'hydrogène (H₂O₂) ou par amenée d'air, d'oxygène pur ou d'ozone.

7. Orthophosphate de fer(III) selon l'une des revendications précédentes, **caractérisé en ce que** l'orthophosphate de fer(III) est, après séparation d'avec le mélange réactionnel, séché à haute température et/ou sous pression réduite.

8. Orthophosphate de fer(III) selon l'une des revendications précédentes, **caractérisé en ce que** > 90 % en poids, d'une manière particulièrement préférée > 95 % en poids de l'orthophosphate de fer(III) se présentent avec la structure cristalline de la métastrengite II (phosphosidérite).

9. Orthophosphate de fer(III) selon l'une des revendications précédentes, **caractérisé en ce qu'**il possède au moins dans une dimension une granulométrie primaire moyenne < 500 nm, d'une manière particulièrement préférée < 100 nm.

10. Orthophosphate de fer(III) selon l'une des revendications précédentes, **caractérisé en ce qu'**il présente une masse volumique apparente > 600 g/l, de préférence > 800 g/l, d'une manière particulièrement préférée > 1000 g/l.

11. Orthophosphate de fer(III) selon l'une des revendications précédentes, **caractérisé en ce qu'**il présente une teneur en chacun du sodium et du potassium < 300 ppm et/ou une teneur en soufre < 300 ppm et/ou une teneur en nitrates < 100 ppm.

12. Utilisation d'orthophosphate de fer(III) selon l'une des revendications précédentes pour la fabrication d'un matériau de cathode au LiFePO₄ pour accumulateurs lithium-ion.

13. Matériau de cathode au LiFePO₄ pour accumulateurs lithiumion, fabriqué par utilisation de l'orthophosphate de fer(III) selon l'une des revendications précédentes.

14. Procédé de fabrication d'orthophosphate de fer(III) de formule générale FePO₄ x nH₂O (n ≤ 2,5), dans lequel on fait réagir à une température comprise dans la plage de 50°C à 180°C et pendant une durée de 0,5 min à 120 min, des composés de fer(II), de fer(III) ou des composés mixtes de fer(II, III), choisis parmi les hydroxydes, les oxydes, les oxyhydroxydes, les oxydes hydratés, les carbonates et les hydroxycarbonates, avec de l'acide phosphorique à une concentration comprise dans la plage de 5 % à 50 % ; par addition d'un oxydant, on convertit en fer(III) le fer(II) éventuellement présent après la réaction ; et on sépare du mélange réactionnel l'orthophosphate de fer(III) solide.

15. Accumulateur lithium-ion, comprenant un matériau de cathode au LiFePO₄ selon la revendication 13.
